# EUROPÄISCHE PATENTSCHRIFT

(11) **EP 4 334 627 B1**
(45) Veröffentlichungstag und Bekanntmachung des Hinweises auf die Patenterteilung: **17.12.2025**
(21) Anmeldenummer: 22725721.9
(22) Anmeldetag: 25.04.2022
(51) Int. Cl.: F16N 25/00, F16N 7/38, F02D 41/22, F16N 29/00

(54) **SCHMIERSYSTEM**
LUBRICATING SYSTEM
SYSTÈME DE LUBRIFICATION

(30) Priorität: 06.05.2021 DE 102021204619
(43) Veröffentlichungstag der Anmeldung: 13.03.2024
(73) Patentinhaber: SKF Lubrication Systems Germany GmbH, 69190 Walldorf (DE)
(72) Erfinder: MANDERA, Markus, 69181 Leimen (DE); SCHÜRMANN, Stefan, 69190 Walldorf (DE); ZAHN, Dennis, 76689 Karlsdorf-Neuthard (DE)
(74) Vertreter: Kuhstrebe, Jochen
(86) Internationale Anmeldenummer: PCT/EP2022/060844
(87) Internationale Veröffentlichungsnummer: WO 2022/233622

(56) Entgegenhaltungen:
- DE-A1- 102004 032 453
- JP-A- H0 658 492
- JP-A- H0 681 997
- US-A1- 2005 003 036
- US-A1- 2012 145 482

## Beschreibung

Die vorliegende Erfindung bezieht sich auf ein Schmiersystem mit einem Progressivverteiler gemäß Patentanspruch 1. Des Weiteren bezieht sich die vorliegende Erfindung auf ein Steuergerät für ein solches Schmiersystem gemäß Patentanspruch 9.

In Schmiersystemen, beispielsweise Zentralschmiersystemen, die einen Progressivverteiler aufweisen, kann es zu unterschiedlichen Fehlfunktionen oder auch vollständigen Ausfällen kommen. Ein solches Schmiersystem kann einen Hauptprogressivverteiler aufweisen, an dem mehrere weitere Verteiler bzw. Kolben angeschlossen sind, die wiederum Schmierstoff an angeschlossene Verbraucher weiterleiten. Dabei kann eine komplette Blockade einer Schmiermittelleitung oder eines Kolbens, ein Leitungsabriss oder auch nur ein Knick in einer Leitung etc. auftreten. Bislang können Fehlfunktionen der Kolben durch einen Kolbendetektor erfasst werden, der die Bewegung eines Kolbens überwacht und Störungen erkennt, die dazu führen, dass sich der Kolben nicht mehr bewegt. Hierbei werden jedoch nur vollständige Blockaden oder ein Ausfall der Schmiermittelversorgung erkannt. Leitungsabrisse im nachgelagerten Teil des Verteilersystems, Teilblockaden oder drohende Blockaden können nicht erkannt werden. Weiterhin wird eine vollständige Blockade zeitverzögert erkannt, weil die Leitungen des Systems auch bei einer vollständigen Blockade Schmiermittel puffern können, sodass nicht blockierte Verteiler noch eine gewisse Zeit Schmierstoff verteilen, ohne dass eine Störung erkannt wird.

Um weitere Fehlfunktionen erkennen zu können, sind weitere Sensoren erforderlich, die an vielen verschiedenen Stellen des Schmiersystems angeordnet sein müssen, um eine umfassende Überwachung zu ermöglichen. Beispielsweise können an jedem Auslass des Progressivverteilers eine Leitungsabrisskontrolle, ein Durchflusssensor, und/oder Drucksensoren vorgesehen werden.

Es ist deshalb Aufgabe vorliegender Erfindung, ein Schmiersystem mit einem Progressivverteiler bereitzustellen, um auf einfache Weise, auch mit wenigen Sensoren, einen Zustand des Schmiersystems überwachen zu können.

Diese Aufgabe wird durch ein Schmiersystem mit einem Progressivverteiler gemäß Patentanspruch 1 sowie ein Steuergerät für ein solches Schmiersystem gemäß Patentanspruch 9 gelöst.

Das Schmiersystem weist einen Progressivverteiler auf, um Schmiermittel an einen oder mehrere Verbraucher auszugeben. Progressivverteiler sind dazu ausgebildet, Schmiermittel fortlaufend an unterschiedliche Schmierstellen bzw. Verbraucher zu dosieren und zu verteilen. Von dem Progressivverteiler können Direktleitungen an die entsprechenden Schmierstellen führen.

Der Progressivverteiler weist einen Gehäuseblock auf, der eine Schmiermitteleinlassbohrung, über die Schmiermittel in den Progressivverteiler einbringbar ist, und mehrere Schmiermittelauslassbohrungen aufweist, über die jeweils eine zugemessene Schmiermittelmenge an einen mit der jeweiligen Schmiermittelauslassbohrung verbundenen Verbraucher abgebbar ist. Weiterhin sind zum Abgeben der zugemessene Schmiermittelmenge in dem Gehäuse mehrere Dosierkolben vorgesehen sind, die in zugehörigen Kolbenbohrungen aufgenommen sind, wobei jeder Kolbenbohrung zwei Schmiermittelauslassbohrungen zugeordnet sind und der Dosierkolben in der Kolbenbohrung verschiebbar ist und dazu ausgelegt ist, alternierend die eine oder die andere Schmiermittelauslassbohrung freizugeben, um die zugemessene Schmiermittelmenge über die Schmiermittelauslassbohrung an den Verbraucher abzugeben. Dabei stehen die Kolbenbohrungen fluidisch mit der Schmiermitteleinlassbohrung in Verbindung, und die Kolbenbohrungen sind untereinander über Verbindungsbohrungen fluidisch miteinander verbunden, um Schmiermittel an die anderen Kolbenbohrungen weiterzuleiten.

Um sicherzustellen, dass der Progressivverteiler sowie das Schmiersystem im Ganzen ordnungsgemäß arbeiten, kann der Progressivverteiler zumindest einen Sensor aufweisen, der dazu ausgebildet ist, zumindest einen Schmiermitteldruck innerhalb des Schmiersystems zu bestimmen. Dieser Schmiermitteldruck und eventuell weitere Messwerte werden von dem Sensor an ein Steuergerät weitergegeben, welches Teil des Schmiersystems ist. Der Sensor und das Steuergerät können kabellos oder kabelgebunden miteinander kommunizieren.

Um nun einen ordnungsgemäßen Betrieb oder Fehler in dem Schmiersystem zu erkennen, ist das Steuergerät dazu ausgebildet, basierend auf den Messwerten Schmierzyklen zu erkennen und den Durchschnittsdruck eines Schmierzyklus zu ermitteln. Insbesondere kann das Steuergerät dazu ausgebildet sein, die Schmierzyklen fortlaufend zu erkennen und für jeden Schmierzyklus einen solchen Durchschnittsdruck zu ermitteln. Anschließend kann das Steuergerät den ermittelten Durchschnittsdruck eines Schmierzyklus mit einem Normaldruck des Schmiersystems vergleichen. Basierend auf dem Vergleichsergebnis kann das Steuergerät den Zustand des Schmiersystems bestimmen.

Es wird also nicht nur allgemein ein Druck des Schmiersystems ermittelt und ein abfallender oder ansteigender Druck erkannt, sondern es wird ein Durchschnittsdruck über einen Schmierzyklus ermittelt und dieser mit einem Normaldruck des Schmiersystems, der einem normalen Betrieb des Schmiersystems entspricht, verglichen. Durch den Vergleich eines aktuellen Durchschnittsdrucks mit einem Normaldruck des Schmiersystems ist es möglich, einen ordnungsgemäßen Betrieb oder fehlerhafte Zustände des Schmiersystems zu erkennen.

Gemäß einer Ausführungsform kann das Steuergerät insbesondere einen Druck und eine Temperatur des Schmiersystems von dem Sensor empfangen. Es können auch mehrere Sensoren vorhanden sein, beispielsweise ein Temperatursensor und ein Drucksensor.

Bevorzugt wird ein einzelner Drucksensor verwendet, der dazu ausgebildet ist, einen Schmiermitteldruck zu bestimmen, wobei der Drucksensor hinsichtlich einer Schmiermittelflussrichtung stromaufwärts von den Dosierkolben angeordnet ist. Das heißt, der Drucksensor bestimmt den Schmiermitteldruck, bevor das Schmiermittel in den ersten Dosierkolben gelangt.

Die Erfinder haben überraschenderweise festgestellt, dass ein Drucksensor, der in einer Schmiermittelflussrichtung stromaufwärts von den Dosierkolben angeordnet ist, eine genauere Zustandserfassung als ein Kolbendetektor, ein Durchflusssensor und/oder eine Leitungsabrisskontrolle allein erlaubt und zusätzlich kostengünstiger ist, insbesondere kostengünstiger als eine Kombination dieser drei Arten der Überwachung. Da der Drucksensor nahe am Einlass des Progressivverteilers des Schmiersystems montiert ist, erfasst der Drucksensor an dieser Stelle das Druckniveau in der Schmierstoffleitung. Aufgrund der Funktionsweise eines Progressivverteilers liegt am Einlass des Verteilers in etwa das Druckniveau des jeweils aktuell angesteuerten Schmiermittelauslasses an, weshalb es ausreichend ist, nur den Druck am Einlass des Verteilers zu erfassen.

Alternativ können mehrere Drucksensoren verwendet werden, die an unterschiedlichen Stellen in dem Schmiersystem bzw. dem Progressivverteiler angeordnet sind, beispielsweise sowohl am Einlass als auch an jedem Auslass des Progressivverteilers. Durch eine solche Anordnung ist es möglich, viele Druckinformationen an mehreren Stellen des Schmiersystems zu erhalten, wodurch eine besonders genaue Ermittlung einer Position eines Fehlers möglich ist. In diesem Fall kann das Steuergerät den Durchschnittsdruck des gesamten Schmiersystems, aber auch den Durchschnittsdruck an jedem Auslass des Progressivverteilers ermitteln. Dies ermöglicht eine umfassende Bewertung des gesamten Schmiersystems.

Gemäß einer weiteren Ausführungsform ist das Steuergerät dazu ausgebildet, einen Schmierzyklus basierend auf Druckschwankungen des Schmiersystems zu erkennen. Durch die Arbeitsweise eines Progressivverteilers schwankt der Druck in dem Schmiersystem während eines Schmierzyklus. Diese Druckschwankungen sind für jeden Schmierzyklus mehr oder weniger identisch, sodass basierend auf diesen Druckschwankungen ein Anfang und ein Ende eines Schmierzyklus erkannt werden können.

Die Druckschwankungen hängen von dem individuellen Aufbau eines Schmiersystems ab, d.h. der Anzahl der Komponenten, der Länge der Leitungen, der Anordnung der Komponenten, der Dauer der Schmierzyklen, etc. Die Druckschwankungen pro Schmierzyklus eines Schmiersystems sind jedoch für jeden Schmierzyklus identisch ist, so dass bei Abweichungen davon Fehlfunktionen des Schmiersystems erkannt werden können.

Das Steuergerät ist dazu ausgebildet, zusätzlich zu dem Durchschnittsdruck eines Schmierzyklus einen Maximaldruck eines Schmierzyklus, einen Minimaldruck eines Schmierzyklus und eine Temperatur des Schmiersystems zu ermitteln. Insbesondere kann der Sensor fortlaufend Messwerte an das Steuergerät übermitteln, wobei das Steuergerät aus diesen Messwerten bzw. Druckwerten einen Maximaldruck und einen Minimaldruck bestimmt. Der Durchschnittsdruck kann durch Mittelwertbildung aller gemessenen Druckwerte bestimmt werden.

Um eine genaue Bestimmung des Zustands des Schmiersystems durchzuführen, ist das Steuergerät dazu ausgebildet, basierend auf der Temperatur des Schmiersystems den Durchschnittsdruck einem Temperaturfenster zuzuordnen. Schmiermittel und damit auch der Druck in dem Schmiersystem hängen stark von der Temperatur ab. Um den Durchschnittsdruck daher mit einem Normaldruck vergleichen zu können, der bei der aktuellen Temperatur gültig ist, muss daher zunächst die aktuelle Temperatur des Schmiersystems bestimmt und einem Temperaturfenster zugeordnet werden. Die Größe des Temperaturfenster kann beliebig gewählt werden, beispielsweise können Temperaturfenster in einem Abstand von 5 Grad definiert sein. Nach Auswahl des entsprechenden Temperaturfensters ruft das Steuergerät den Normaldruck des Schmiersystems, der diesem Temperaturfenster zugeordnet ist, aus einer Datenbank ab. Die Datenbank kann beispielsweise Teil des Steuergeräts sein oder kann entfernt dazu, beispielsweise auf einem Server, angeordnet sein. Vorzugsweise sind in der Datenbank die Normaldruckwerte des Schmiersystems für mehrere Temperaturfenster abgespeichert.

Sofern für ein Temperaturfenster noch kein Normaldruck in der Datenbank vorhanden ist, kann das Steuergerät den derzeit ermittelten Durchschnittsdruck als Normaldruck für das Temperaturfenster abspeichern. Auf diese Weise ist es möglich, die Datenbank zu erweitern, wenn noch keine Daten für ein aktuelles Temperaturfenster vorhanden sind. Es wird hierbei davon ausgegangen, dass das Schmiersystem zu Beginn fehlerfrei funktioniert, sodass ein solcher Durchschnittsdruck zumindest zu Beginn des Betriebs des Schmiersystems, wenn noch keine ausreichenden Daten in der Datenbank hinterlegt sind, als Normaldruck für das Temperaturfenster angesehen werden kann.

Des Weiteren kann das Steuergerät dazu ausgebildet sein, die Datenbank fortlaufend zu erweitern. Das bedeutet, dass das Steuergerät, wenn ein störungsfreier Betrieb des Schmiersystems erkannt wurde, den aktuellen Durchschnittsdruck eines Temperaturfensters verwenden kann, um den Normaldruck des Schmiersystems für dieses Temperaturfenster in der Datenbank zu aktualisieren. Der Normaldruck des Schmiersystems wird dabei als ein Durchschnitt von Druckwerten in einem Temperaturfenster definiert, wobei diese Druckwerte einem störungsfreien Betrieb des Schmiersystems zuzuordnen sind. Wird also ein störungsfreier Betrieb erkannt, wird der aktuelle Durchschnittsdruck zu den bereits vorhandenen Durchschnittsdruckwerten dieses Temperaturfensters hinzugefügt und der Durchschnittswert aller Durchschnittsdruckwerte wird als aktualisierter Normaldruck des Schmiersystems für das derzeitige Temperaturfenster abgespeichert. Auf diese Weise wird die Datenbank fortlaufend aktualisiert, sodass eine Art selbst lernendes System implementiert wird.

Der durch das Steuergerät ermittelte Zustand des Schmiersystems kann einen störungsfreien Betrieb, eine Fehlfunktion des Schmiersystems oder keine Funktion des Schmiersystems angeben. Unter einem störungsfreien Betrieb wird ein Betrieb des Schmiersystems verstanden, in dem das Schmiersystem ordnungsgemäß ohne Störungen oder Fehlfunktionen arbeitet.

Keine Funktion des Schmiersystems bedeutet, dass überhaupt keine Funktion des Schmiersystems erkannt wird. Dies kann der Fall sein, wenn ein vollständiger Ausfall des Schmiersystems vorliegt oder wenn die Sensoren vollständig ausgefallen sind.

Eine Fehlfunktion des Schmiersystems kann eine Blockade einer Schmiermittelleitung oder eines Kolbens, ein Knick einer Schmiermittelleitung, ein Leitungsabriss einer Schmiermittelleitung oder eine sonstige Fehlfunktion des Schmiersystems sein. Insbesondere kann es sich hier um Fehlfunktionen handeln, bei denen noch eine gewisse Menge an Schmiermittel befördert wird.

Eine Blockade einer Schmiermittelleitung kann beispielsweise erkannt werden, wenn drei aufeinanderfolgende Durchschnittsdruckwerte um einen Faktor k größer als der temperaturabhängige Normaldruck sind und die Werte kontinuierlich ansteigen. Die Werte müssen nicht linear ansteigen, da die Entwicklung des Drucks bei einer Blockade einem begrenzten Wachstum entspricht. Alternativ kann von einer Blockade ausgegangen werden, wenn ein Wert eines Durchschnittsdrucks mindestens 200 % über dem Normaldruck liegt. Unter einer Blockade wird verstanden, dass eine Schmiermittelleitung beispielsweise durch Fremdkörper, Fettablagerung oder ähnliches blockiert wird. Insbesondere kann sich diese Blockade kontinuierlich aufbauen, beispielsweise indem der Durchfluss durch die Schmiermittelleitung immer weiter verringert wird.

Werden mindestens drei aufeinanderfolgende Durchschnittsdruckwerte um einen Faktor k größer als der temperaturabhängige Normaldruck erkannt, wobei die Werte nicht-kontinuierlich ansteigen, wird dies als Knick in einer Leitung definiert.

Werden mindestens drei aufeinanderfolgende Werte des Durchschnittsdrucks um einen Faktor k kleiner als der temperaturabhängige Normaldruck erkannt, wobei die Werte insbesondere nicht-kontinuierlich abfallen, wird von einem Leitungsabriss ausgegangen. Ein solcher Leitungsabriss führt zu einer Leckage von Schmiermittel, wodurch der Druck in dem Schmiersystem abfällt.

Kontinuierlich abfallende Druckwerte könnten ein Hinweis auf eine zunehmende Undichtigkeit sein, z.B. ein Loch in einer Leitung, das immer größer wird.

Der Faktor k, wie er hier verwendet wird, kann anhand von Versuchen bestimmt werden. Bevorzugt kann er anpassbar sein und bei Bedarf (z.B. in dem Fall von vielen falschen Störmeldungen) für jedes System individuell angepasst werden kann.

Sind sonstige Abweichungen von dem temperaturabhängigen Normaldruck vorhanden, kann zwar unter Umständen nicht bestimmt werden, welche Art von Fehler vorliegt, aber es wird erkannt, dass ein Fehler des Schmiersystems vorliegt.

Bei einem störungsfreien Betrieb wird ein regelmäßiger Wechsel zwischen den Schmierzyklen und Pausenzeiten erkannt, wobei keine relevanten Abweichungen der Werte des Durchschnittsdrucks von dem temperaturabhängigen Normaldruck vorliegen. Wird ein solcher störungsfreier Betrieb erkannt, wird der aktuelle Durchschnittsdruck zur Aktualisierung des Normaldrucks in der Datenbank verwendet, wie bereits oben erläutert ist.

Der erkannte Zustand des Schmiersystems kann über eine visuelle Anzeige ausgegeben werden. Im einfachsten Fall erfolgt eine Anzeige durch eine farbige Anzeige, z.B. mittels LEDs. Beispielsweise kann ein Ampelsystem mit einer Anzeige in rot, gelb oder grün verwendet werden, um keine Funktion, eine Fehlfunktion oder einen störungsfreien Betrieb anzugeben. Zusätzlich können auch weitere Informationen in einem Display angezeigt werden, die genauere Angaben über den derzeitigen Zustand bzw. eine Fehlfunktion des Schmiersystems angeben. Auch kann das Steuergerät den entsprechenden Zustand des Schmiersystems an ein mobiles Gerät, beispielsweise ein Tablet, Laptop, Mobiltelefon oder ähnliches, ausgeben und dort anzeigen.

Die Messwerte des zumindest einen Sensors können als analoge Signale vorliegen. Insbesondere können die Messwerte als zeitaufgelöstes Signal vorliegen, um einen Verlauf des Drucks über die Zeit zu erkennen. Dies ist erforderlich, um zum einen die Schmierzyklen zu erkennen, und um zum anderen den Druck im Verlauf des Schmierzyklus erkennen und verarbeiten zu können.

Die empfangenen Messwerte können in dem Steuergerät beispielsweise als Array gespeichert werden, in dem mehrere Werte, insbesondere Druck und Temperatur, pro Zeit enthalten sind.

Je nach verfügbarer zeitlicher Auflösung, d.h. je nach Anzahl der Werte pro Schmierzyklus, kann das Steuergerät nur eine Einschätzung des Zustands des Schmiersystems in keine Funktion, Fehlfunktion oder störungsfreien Betrieb vornehmen. Sind genauere bzw. mehr Werte pro Schmierzyklus vorhanden, kann eine genauere Entscheidung über den aktuellen Zustand, wie oben erläutert, durchgeführt werden. Es ist auch möglich, dass das Steuergerät, wenn eine Fehlfunktion ohne weitere Bestimmung erkannt wird, ein entsprechendes Signal an die Sensoren ausgibt, um für den nächsten Schmierzyklus ein zeitlich höher aufgelöstes Signal zu erhalten. Das bedeutet, dass zunächst mit einer geringen Abtastrate die Messwerte von dem zumindest einen Sensor erhalten werden, und wenn ein Fehler auftritt, zu einer höheren Abtastrate an dem Sensor umgeschaltet wird, um im nächsten Schritt bzw. bei der Analyse des nächsten Schmierzyklus genauere Informationen bereitstellen zu können. Zusätzlich zu den Messwerten Druck und Temperatur sind auch weitere Messwerte denkbar, beispielsweise Vibration des Verteilers, Geschwindigkeit der Kolbenbewegung (z.B. gemessen über Ultraschall oder Induktivität), Durchflussmenge, etc.

Ein weiterer Aspekt der vorliegenden Erfindung bezieht sich auf ein Verfahren gemäß Patentanspruch 10 zum Bestimmen des Zustands eines Schmiersystems mit einem Progressivverteiler, der dazu ausgebildet ist, Schmiermittel an einen Verbraucher auszugeben. Das Verfahren weist des Weiteren auf: Bestimmen von zumindest einem Schmiermitteldruck innerhalb des Schmiersystems durch einen Sensor, Empfangen der Messwerte von dem Sensor durch ein Steuergerät, Erkennen von Schmierzyklen basierend auf den Messwerten, Ermitteln des Durchschnittsdrucks eines Schmierzyklus, Vergleichen des ermittelten Durchschnittsdrucks mit einem Normaldruck des Schmiersystems, und Bestimmen des Zustands des Schmiersystems basierend auf dem Vergleichsergebnis

Ein noch weiterer Aspekt der vorliegenden Erfindung bezieht sich auf ein Computerprogrammprodukt, das einen Computerprogrammcode aufweist, der dazu ausgebildet ist, eine Steuereinheit, zum Beispiel einen Computer, und/oder das oben beschriebene Steuergerät, zu veranlassen, die oben beschriebenen Schritte durchzuführen. Die Datenbank kann auch durch das Computerprogramm implementiert werden.

Das Computerprogrammprodukt kann als eine Speichervorrichtung, wie beispielsweise eine Speicherkarte, USB-Stick, CD-ROM, DVD, bereitgestellt werden und/oder kann eine Datei sein, die von einem Server, insbesondere einem entfernten Server, in einem Netzwerk heruntergeladen werden kann. Das Netzwerk kann ein kabelloses Kommunikationsnetzwerk zum Übertragen der Datei mit dem Computerprogrammprodukt sein.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: ein schematisches Blockdiagramm eines allgemeinen Aufbaus eines Schmiersystems,
- Fig. 2:: zeigt ein schematisches Ablaufdiagramm eines Verfahrens zum Bestimmen eines Zustands eines Schmiersystems,
- Fig. 3:: zeigt einen Graph, der den zeitlichen Verlauf eines Druckniveaus in dem Schmiersystem von Fig. 1 mit einer Blockade darstellt, und
- Fig. 4:: zeigt einen Graph, der den zeitlichen Verlauf eines Druckniveaus in dem Schmiersystem von Fig. 1 mit Leitungsabrissen darstellt.

Im Folgenden werden gleiche oder funktionell gleichwirkende Elemente mit denselben Bezugszeichen gekennzeichnet.

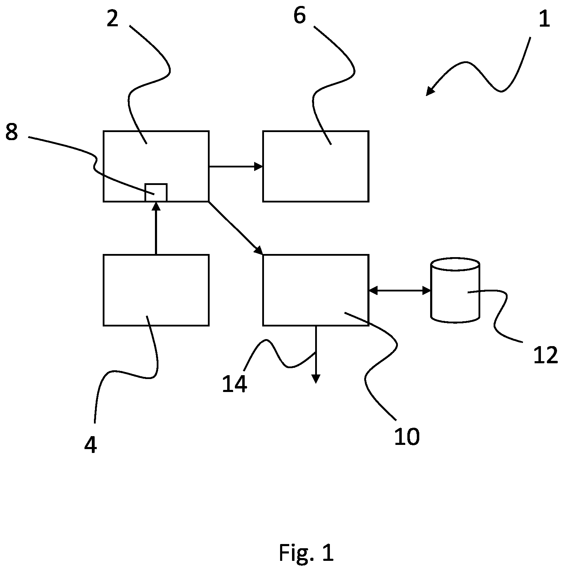

Fig. 1 zeigt ein Schmiersystem 1, welches einen Progressivverteiler 2 aufweist. Der Progressivverteiler 2 dient dazu, Schmiermittel aus einem Schmiermittelreservoir 4 über verschiedene Dosierkolben (in Fig. 1 nicht dargestellt) an zumindest einen Verbraucher 6 auszugeben. Der Progressivverteiler 2 dient dazu, durchgehend eine benötigte Schmiermittelmenge an den Verbraucher 6 auszugeben. Der Progressivverteiler 2 weist zumindest einen Sensor 8 auf, der dazu ausgebildet ist zumindest einen Schmiermitteldruck innerhalb des Schmiersystems 1 zu bestimmen. Der Sensor 8 kann beispielsweise ein Drucksensor sein. Der Sensor 8 kann auch aus mehreren Sensoren bestehen, die beispielsweise einen Drucksensor und einen Temperatursensor oder weitere Sensoren aufweisen können. Obwohl hier nur ein Sensor 8 dargestellt ist, der vorzugsweise an einem Einlass des Progressivverteilers 2 angeordnet ist, ist es auch möglich, dass das Schmiersystem 1 mehrere Sensoren aufweist, die an verschiedenen Stellen des Schmiersystems 1 angeordnet sind. Je nach Anzahl und Position der Sensoren ist es möglich, weitere Informationen über das Schmiersystem zu ermitteln.

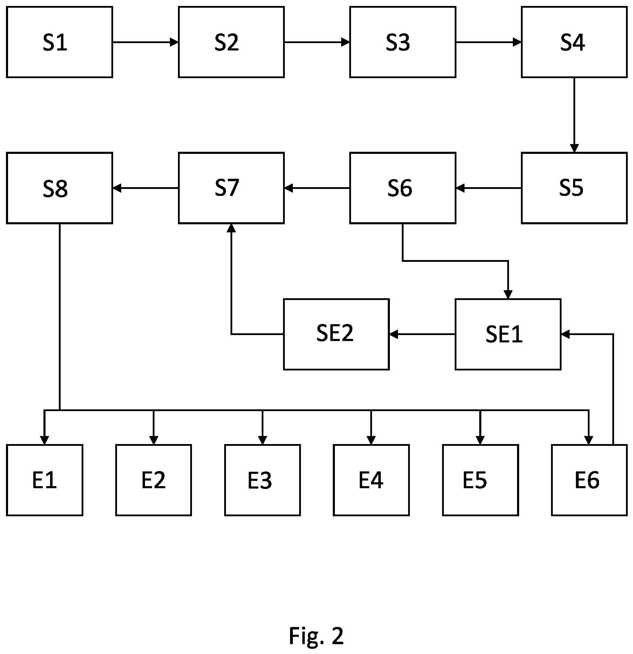

Um einen Zustand des Schmiersystems 1 bestimmen zu können, weist das Schmiersystem 1 ein Steuergerät 10 auf. Das Steuergerät 10 ist dazu ausgebildet, Messwerte von dem zumindest einen Sensor 8 zu empfangen. Die Messwerte können zumindest einen Druck und eine Temperatur des Schmiersystems 1 enthalten. Das Steuergerät 10 ist dazu ausgebildet, basierend auf den Messwerten von dem zumindest einen Sensor 8 Schmierzyklen des Schmiersystems 1 zu erkennen und den Durchschnittsdruck eines Schmierzyklus zu ermitteln, den ermittelten Durchschnittsdruck mit einem Normaldruck des Schmiersystems 1 zu vergleichen und den Zustand des Schmiersystems 1 basierend auf dem Vergleichsergebnis zu bestimmen. Dies ist unten unter Bezugnahme auf Fig. 2 näher erläutert. Das Steuergerät 10 kann mit einer Datenbank 12 kommunizieren, um gespeicherte Normaldruckwerte für das Schmiersystem 1 abzurufen.

Der ermittelte Zustand kann dann durch das Steuergerät 10 ausgegeben werden, beispielsweise über einen Ausgang 14. Der ausgegebene Zustand des Schmiersystems 1 kann in Form einer visuellen Anzeige durch farbige Ausgabe, z.B. mittels LEDs, als detaillierte Anzeige auf einem Bildschirm oder auf einem Mobilgerät oder ähnlichem ausgegeben werden.

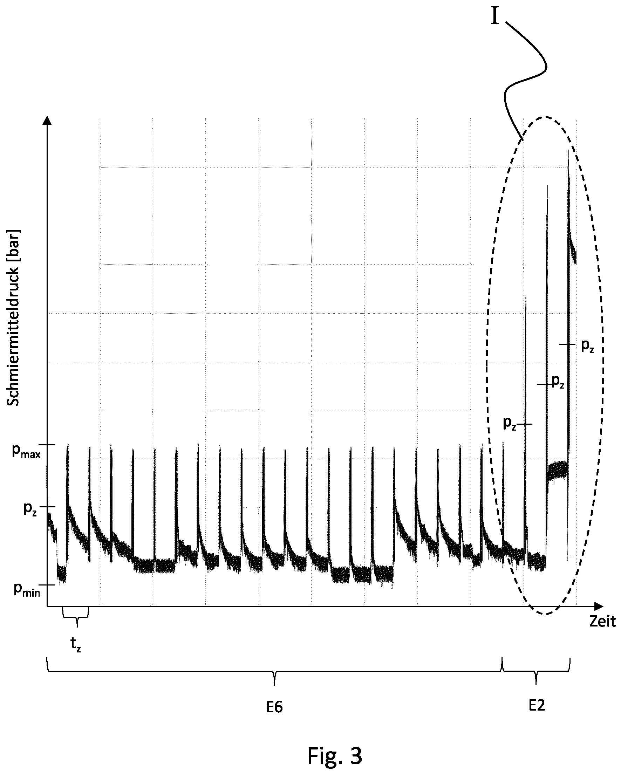

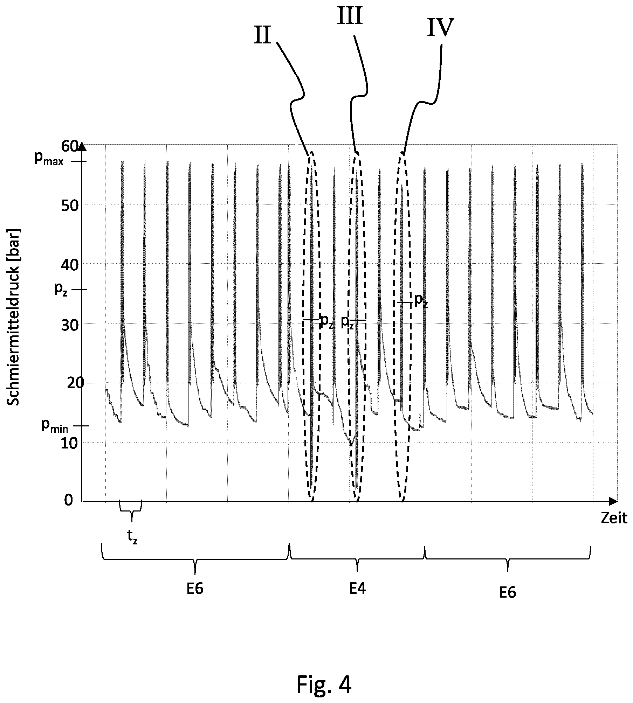

Im Folgenden wird nun unter Bezugnahme auf Fig. 2 ein beispielhaftes Verfahren beschrieben, das durch das Steuergerät 10 ausgeführt wird, um einen Zustand des Schmiersystems 1 zu bestimmen. In Figuren 3 und 4 werden die zugehörigen Signale beispielhaft dargestellt.

In einem ersten Schritt S1 werden die Messwerte des Drucksensors 8 an das Steuergerät 10 übertragen. Es sollte beachtet werden, dass zusätzlich zu dem Drucksensor 8 weitere Drucksensoren (nicht dargestellt) verwendet werden können. Des Weiteren kann ein separater Temperatursensor (nicht dargestellt) verwendet werden, um die Temperatur des Schmiersystems 1 zu messen.

Das folgende Verfahren verwendet beispielhaft einen Drucksensor 8, der nahe am Einlass des Progressivverteilers 2 des Schmiersystems 1 montiert ist, und an dieser Stelle das Druckniveau in der Schmiermittelleitung überwacht. Aufgrund der Funktionsweise des Progressivverteilers 2 liegt am Einlass des Progressivverteilers 2 in etwa das Druckniveau eines im Moment angesteuerten Auslasses an, der den Verbraucher 6 mit Schmiermittel versorgt. Dieses Druckniveau ist abhängig von der Länge der nachgeschalteten Leitung, der nachfolgenden Komponente (weiterer Progressivverteiler, Schmierstelle), der Art der Schmierstelle, dem Schmiermittel, der Temperatur des Schmiermittels und anderer Faktoren. Durch den kontinuierlichen Wechsel des angesteuerten Auslasses verändert sich das Druckniveau fortlaufend. Die Reihenfolge, mit der die Auslässe des Progressivverteilers 2 angesteuert werden, ist systembedingt immer identisch. Auf diese Weise entsteht ein sich wiederholendes Muster des Druckniveaus, welches für jedes Schmiersystem einzigartig ist. Wie im Folgenden unter Bezugnahme auf Figuren 2 bis 4 gesehen werden kann, lassen Veränderungen des Musters Rückschlüsse auf eine Veränderung im Schmiersystem und die Art der Veränderung, z.B. Leitungsabriss, drohende Blockade, etc., zu.

Die Messwerte des Sensors 8 liegen vorzugsweise als Signale vor, die zeitlich aufgelöst sind. Insbesondere enthalten die Messwerte einen Druck und eine Temperatur des Schmiersystems 1.

In Schritt S2 werden die empfangenen Messwerte als Variablen gespeichert. Beispielsweise können die Variablen in Form eines Arrays abgespeichert werden, in dem mehrere Werte pro Zeit vorliegen. Die mehreren Werte enthalten dabei zumindest den Druck und die Temperatur des Schmiersystems 1 pro Zeit.

Das Steuergerät 10 ermittelt dann in Schritt S3 die Start- und Endzeitpunkte der Schmierzyklen (t_{z}) basierend auf den Messwerten. Ein Schmierzyklus (t_{z}) kann erkannt werden, indem Druckschwankungen, die in den Messwerten erkannt werden, einem Beginn und einem Ende eines Schmierzyklus (t_{z}) zugeordnet werden.

Wurde ein Schmierzyklus (t_{z}) erkannt, bildet das Steuergerät 10 in Schritt S4 einen Durchschnittsdruck pro Schmierzyklus (p_{z}). Der Durchschnittsdruck (p_{z}) ist dabei insbesondere ein Durchschnittswert aller Druckwerte eines Schmierzyklus (t_{z}).

In Schritt S5 speichert das Steuergerät 10 für den aktuellen Schmierzyklus einen Durchschnittsdruck des Schmierzyklus (p_{z}), einen Maximaldruck (pₘₐₓ) und einen Minimaldruck (pₘᵢₙ) des Schmierzyklus (t_{z}), sowie eine Temperatur des Schmierzyklus (t_{z}).

Anschließend wird in Schritt S6 der derzeitige Durchschnittsdruck (p_{z}) einem Temperaturfenster (T) zugeordnet. Dies erfolgt abhängig von der gemessenen Temperatur des aktuellen Schmierzyklus. Um den Durchschnittsdruck (p_{z}) einem Temperaturfenster (T) zuzuordnen, kann das Steuergerät 10 hier auf eine Datenbank 12 zugreifen, in der bereits bestehende Temperaturfenster mit zugehörigen Normaldruckwerten (p_{gT}) gespeichert sind. Sofern noch kein Normaldruck (p_{gT}) für das aktuelle Temperaturfenster (T) vorliegt, geht das Steuergerät in eine Einlernphase, die weiter unten erläutert wird.

Wenn ein Normaldruck (p_{gT}) für das aktuelle Temperaturfenster (T) vorliegt, vergleicht das Steuergerät in Schritt S7 den aktuellen Durchschnittsdrucks (p_{z}) mit dem temperaturabhängigen Normaldruck (p_{gT}) des Temperaturfensters (T), der in der Datenbank 12 gespeichert ist.

Anschließend kann das Steuergerät 10 das Vergleichsergebnis in Schritt S8 einordnen. Je nachdem, wie viele Messwerte vorliegen, kann das Ergebnis grob oder feiner sein. Als grobe Einordnung kann das Steuergerät 10 beispielsweise bestimmen, dass das Schmiersystem 1 keine Funktion hat (E1), dass eine Fehlfunktion vorliegt (E2-E5) oder dass ein störungsfreier Betrieb vorliegt (E6). Sind genauere Daten vorhanden, kann das Steuergerät 10 auch eine Art der Fehlfunktion bestimmen (E2 bis E5).

Liegt kein Signal des Sensors 8 vor oder sind in den Messwerten keine Druckveränderungen vorhanden, bestimmt das Steuergerät 10, dass keine Funktion (E1) des Schmiersystems 1 vorliegt. Dies kann der Fall sein, wenn ein vollständiger Ausfall des Schmiersystems 1 vorliegt oder wenn die Sensoren 8 vollständig ausgefallen sind.

Wird eine Fehlfunktion des Schmiersystems 1 erkannt, kann, wenn ausreichend genaue Messwerte vorliegen, eine Unterteilung in die folgenden Fehlfunktionen erfolgen:
Eine Blockade einer Schmiermittelleitung kann erkannt werden (E2), wenn drei aufeinanderfolgende Durchschnittsdruckwerte (p_{z}) um einen Faktor k größer als der temperaturabhängige Normaldruck (p_{gT}) sind und die Werte kontinuierlich ansteigen. Alternativ kann von einer Blockade ausgegangen werden, wenn ein Wert des Durchschnittsdrucks (p_{z}) mindestens 200% über dem Normaldruck (p_{gT}) liegt. Eine Blockade liegt beispielsweise vor, wenn eine Schmiermittelleitung durch Fremdkörper oder ähnliches blockiert wird. Insbesondere kann sich diese Blockade kontinuierlich aufbauen, beispielsweise indem der Durchfluss durch die Schmiermittelleitung immer weiter verringert wird.

Eine solche Blockade ist beispielhaft in Fig. 3 dargestellt, die einen zeitlichen Verlauf des Schmiermitteldrucks zeigt, der beispielhaft durch den Drucksensor 8 gemessen wird. Wie gesehen werden kann, steigt innerhalb des Bereichs I der Druck an. Dies deutet auf eine Blockade der Leitung in dem Schmiersystem 1 hin. Insbesondere ist zu sehen, dass der Maximalwert des Schmiermitteldrucks ansteigt, je länger die Blockade andauert.

Werden mindestens drei aufeinanderfolgende Durchschnittsdruckwerte (p_{z}) um einen Faktor k größer als der temperaturabhängige Normaldruck (p_{gT}) erkannt, wobei die Werte nicht-kontinuierlich ansteigen, wird dies als Knick in einer Leitung definiert (E3).

Werden mindestens drei aufeinanderfolgende Werte des Durchschnittsdrucks (p_{z}) um einen Faktor k kleiner als der temperaturabhängige Normaldruck (p_{gT}) erkannt, wobei die Werte nicht-kontinuierlich abfallen, wird von einem Leitungsabriss ausgegangen (E4). Ein solcher Leitungsabriss führt zu einer Leckage von Schmiermittel, wodurch der Druck in dem Schmiersystem 1 abfällt.

Ein solcher Leitungsabriss ist in Fig. 4 dargestellt, die einen zeitlichen Verlauf des Schmiermitteldrucks zeigt, der ebenfalls beispielhaft durch den Drucksensor 8 gemessen werden kann. Hier wurde ein Leitungsabriss in einem Versuchsaufbau künstlich erzeugt, indem zu verschiedenen Zeitpunkten Leitungen abgeklemmt wurden. Die Bereiche II, III und IV markieren diese Zeitpunkte, die verschiedene Leitungsabrisse zeigen. Wie gesehen werden kann, kann dem von dem Drucksensor 8 erfassten Schmiermitteldruckverlauf eine Änderung entnommen werden. Mit dem Drucksensor 8 am Einlass des Progressivverteilers 2 kann nicht nur ein Leitungsabriss an diesem Progressivverteiler 2 bestimmt werden, sondern auch ein Leitungsabriss an anderen Stellen des Schmiersystems 1. Es ist zu beachten, dass der künstlich erzeugte Leitungsabriss jeweils nach einem Zyklus behoben wurde, weshalb in Fig. 4 keine drei aufeinanderfolgenden Werte des Durchschnittsdrucks (p_{z}), die um einen Faktor k kleiner als der temperaturabhängige Normaldruck (p_{gT}) sind, zu erkennen sind.

Sind sonstige Abweichungen von dem temperaturabhängigen Normaldruck (p_{gT}) vorhanden, kann zwar unter Umständen nicht bestimmt werden, welche Art von Fehler vorliegt, aber es wird erkannt, dass ein Fehler des Schmiersystems 1 vorliegt (E5).

Erkennt das Steuergerät 10 einen regelmäßigen Wechsel zwischen den Schmierzyklen und den Pausenzeiten ohne relevante Abweichungen des Durchschnittsdrucks (p_{z}) von dem temperaturabhängigen Normaldruck (p_{gT}), so liegt ein störungsfreier Betrieb vor (E6). In diesem Fall kann zum einen das Steuergerät 10 ausgeben, dass ein störungsfreier Betrieb des Schmiersystems 1 vorliegt, und zum anderen kann diese Information verwendet werden, um die Datenbank 12 zu aktualisieren. Das bedeutet, dass die aktuellen Werte für die Einlernphase SE1 bis SE2 verwendet wird, um den weiteren Betrieb genauere Informationen bereitstellen zu können.

Der aktuelle Wert des Durchschnittsdrucks (p_{z}) wird daher zur Erweiterung der Datenbank 12 des temperaturabhängigen Normaldrucks (p_{gT}) des Temperaturfensters (T) verwendet (SE1). Ist bereits ein Wert für das aktuelle Temperaturfenster (T) vorhanden, wird der Durchschnittsdrucks (p_{z}) verwendet, um einen neuen temperaturabhängigen Normaldruckwert (p_{gT}) zu bilden (Schritt SE2). Dieser setzt sich aus dem Durchschnitt aller störungsfreien Werte (p_{z}) aus einem Temperaturfenster (T) zusammen. Auf diese Weise kann jedes Mal, wenn ein störungsfreier Betrieb (E6) bestimmt wird, die Datenbank 12 entsprechend erweitert werden und der temperaturabhängige Normaldruck (p_{gT}) wird auf diese Weise genauer.

Wurde in Schritt S6 erkannt, dass noch kein Normaldruck (pgT) für das Temperaturfenster (T) vorliegt, wird in Schritt SE1 die Datenbank 12 für das Temperaturfenster (T) nicht aktualisiert, sondern erweitert. Der aktuelle gemessene und berechnete Durchschnittsdruck (p_{z}) des Temperaturfensters (T) wird in diesem Fall als temperaturabhängiger Normaldruck (p_{gT}) für das Temperaturfenster (T) gespeichert. Da zu Beginn des Betriebs des Schmiersystems 1 davon ausgegangen wird, dass ein störungsfreier Betrieb vorliegt, kann dieser gemessene Wert als Normaldruck (p_{gT}) angesehen werden.

Zusammenfassend ist es durch das oben beschriebene Schmiersystem bzw. Steuergerät und das entsprechende Analyseverfahren möglich, auf einfache Weise einen Zustand des Schmiersystems zu bestimmen. Insbesondere kann, wenn eine Fehlfunktion vorliegt, diese basierend auf den vorhandenen Messwerten genauer definiert werden.

### Bezugszeichenliste

- 1: Schmiersystem
- 2: Progressivverteiler
- 4: Reservoir
- 6: Verbraucher
- 10: Steuergerät
- 12: Datenbank
- 14: Ausgang
- E1-E6: Ergebnis
- p_{z}: Durchschnittsdruck
- pmax: Maximaldruck
- pₘᵢₙ: Minimaldruck
- S1-S8: Verfahrensschritte
- SE1-SE2: Einlernphase
- t_{z}: Schmierzyklus
- I-IV: Signalbereiche

## Patentansprüche

1. Schmiersystem (1) mit einem Progressivverteiler (2), um Schmiermittel an einen Verbraucher (6) auszugeben, wobei der Progressivverteiler (2) zumindest einen Sensor (8) aufweist, der dazu ausgebildet ist, zumindest einen Schmiermitteldruck innerhalb des Schmiersystems (1) zu bestimmen, wobei das Schmiersystem (1) des Weiteren ein Steuergerät (10) aufweist, welches dazu ausgebildet ist, Messwerte von dem Sensor (8) zu empfangen,
wobei das Steuergerät (10) dazu ausgebildet ist, basierend auf den Messwerten Schmierzyklen zu erkennen und den Durchschnittsdruck eines Schmierzyklus zu ermitteln, den ermittelten Durchschnittsdruck mit einem Normaldruck des Schmiersystems (1) zu vergleichen und den Zustand des Schmiersystems (1) basierend auf dem Vergleichsergebnis zu bestimmen,
wobei das Steuergerät (10) dazu ausgebildet ist, zusätzlich zu dem Durchschnittsdruck einen Maximaldruck, einen Minimaldruck und eine Temperatur des Schmiersystems (1) zu ermitteln, **dadurch gekennzeichnet, dass** das Steuergerät dazu ausgebildet ist, basierend auf der Temperatur des Schmiersystems (1) den Durchschnittsdruck einem Temperaturfenster zuzuordnen, und aus einer Datenbank (12) den Normaldruck des Schmiersystems (1), der dem Temperaturfenster zugeordnet ist, abzurufen.

2. Schmiersystem nach Anspruch 1, wobei die Messwerte zumindest ein Druck und eine Temperatur des Schmiersystems (1) sind.

3. Schmiersystem nach Anspruch 1 oder 2, wobei das Steuergerät (10) dazu ausgebildet ist, einen Schmierzyklus basierend auf Druckschwankungen des Schmiersystems (1) zu erkennen.

4. Schmiersystem nach einem der vorhergehenden Ansprüche, wobei das Steuergerät (10) dazu ausgebildet ist, den Durchschnittsdruck als Normaldruck für das Temperaturfenster zu speichern, wenn für das Temperaturfenster kein Normaldruck in der Datenbank (12) vorhanden ist.

5. Schmiersystem nach einem der vorhergehenden Ansprüche, wobei das Steuergerät (10) dazu ausgebildet ist, den Normaldruck des Schmiersystems (1) für ein Temperaturfenster basierend auf dem aktuellen Durchschnittsdruck dieses Temperaturfensters zu aktualisieren, wenn ein störungsfreier Betrieb erkannt ist.

6. Schmiersystem nach einem der vorhergehenden Ansprüche, wobei der Zustand des Schmiersystems (1) einen störungsfreien Betrieb, eine Fehlfunktion des Schmiersystems (1) oder keine Funktion des Schmiersystems (1) angibt.

7. Schmiersystem nach Anspruch 6, wobei die Fehlfunktion eine Blockade einer Schmiermittelleitung, ein Knick einer Schmiermittelleitung, ein Leitungsabriss einer Schmiermittelleitung oder eine sonstige Fehlfunktion des Schmiersystems (1) ist.

8. Schmiersystem nach einem der vorhergehenden Ansprüche, wobei der zumindest eine Sensor (8) einen Drucksensor aufweist, der vor dem Progressivverteiler (2) angeordnet ist.

9. Steuergerät (10) eingerichtet zum Ausführen des Verfahrens nach dem Anspruch 10 für ein Schmiersystem (1) nach einem der vorhergehenden Ansprüche.

10. Verfahren zum Bestimmen des Zustands eines Schmiersystems (1) mit einem Progressivverteiler (2), der dazu ausgebildet ist, Schmiermittel an einen Verbraucher (6) auszugeben, wobei das Verfahren aufweist:
Bestimmen von zumindest einem Schmiermitteldruck innerhalb des Schmiersystems (1) durch einen Sensor (8),
Empfangen der Messwerte von dem Sensor (8) durch ein Steuergerät (10),
Erkennen von Schmierzyklen basierend auf den Messwerten,
Ermitteln des Durchschnittsdrucks eines Schmierzyklus,
Ermitteln eines Maximaldrucks, eines Minimaldrucks und einer Temperatur des Schmiersystems,
Zuordnen des Durchschnittsdrucks zu einem Temperaturfenster basierend auf der Temperatur des Schmiersystems (1),
Abrufen des Normaldrucks des Schmiersystems (1), der dem Temperaturfenster zugeordnet ist, aus einer Datenbank (12),
Vergleichen des ermittelten Durchschnittsdrucks mit einem Normaldruck des Schmiersystems (1), und
Bestimmen des Zustands des Schmiersystems (1) basierend auf dem Vergleichsergebnis.

## Claims

1. Lubrication system (1) having a progressive distributor (2) for dispensing lubricant to a consumer (6), wherein the progressive distributor (2) has at least one sensor (8) which is designed to determine at least one lubricant pressure within the lubrication system (1), wherein the lubrication system (1) further has a control unit (10) which is designed to receive measurement values from the sensor (8),
wherein the control unit (10) is designed to identify lubrication cycles based on the measurement values and to ascertain the average pressure of a lubrication cycle, to compare the determined average pressure with a normal pressure of the lubrication system (1) and to determine the state of the lubrication system (1) based on the comparison result,
wherein the control unit (10) is designed to ascertain, in addition to the average pressure, a maximum pressure, a minimum pressure and a temperature of the lubrication system (1), **characterized in that** the control unit is designed to assign the average pressure to a temperature window based on the temperature of the lubrication system (1), and to call up from a database (12) the normal pressure of the lubrication system (1) that is assigned to the temperature window.

2. Lubrication system according to Claim 1, wherein the measurement values are at least a pressure and a temperature of the lubrication system (1).

3. Lubrication system according to Claim 1 or 2, wherein the control unit (10) is designed to identify a lubrication cycle based on pressure fluctuations in the lubrication system (1).

4. Lubrication system according to any of the preceding claims, wherein the control unit (10) is designed to store the average pressure as the normal pressure for the temperature window if there is no normal pressure in the database (12) for the temperature window.

5. Lubrication system according to any of the preceding claims, wherein the control unit (10) is designed to update the normal pressure of the lubrication system (1) for a temperature window based on the current average pressure of this temperature window when problem-free operation is identified.

6. Lubrication system according to any of the preceding claims, wherein the state of the lubrication system (1) indicates problem-free operation, a malfunction in the lubrication system (1) or no functioning of the lubrication system (1).

7. Lubrication system according to Claim 6, wherein the malfunction is a blockage of a lubricant line, a kink in a lubricant line, a crack in a lubricant line or some other malfunction in the lubrication system (1).

8. Lubrication system according to any of the preceding claims, wherein the at least one sensor (8) has a pressure sensor, which is arranged in front of the progressive distributor (2).

9. Control unit (10) designed for executing the method according to Claim 10 for a lubrication system (1) according to any of the preceding claims.

10. Method for determining the state of a lubrication system (1) having a progressive distributor (2) which is designed to dispense lubricant to a consumer (6), wherein the method comprises:
a sensor (8) determining at least one lubricant pressure within the lubrication system (1),
a control unit (10) receiving the measurement values from the sensor (8),
identifying lubrication cycles based on the measurement values,
ascertaining the average pressure of a lubrication cycle, ascertaining a maximum pressure, a minimum pressure and a temperature of the lubrication system,
assigning the average pressure to a temperature window based on the temperature of the lubrication system (1),
calling up the normal pressure of the lubrication system (1) that is assigned to the temperature window from a database (12),
comparing the ascertained average pressure with a normal pressure of the lubrication system (1), and
determining the state of the lubrication system (1) based on the comparison result.

## Revendications

1. Système de lubrification (1) comprenant un distributeur progressif (2) pour délivrer un lubrifiant à un consommateur (6), le distributeur progressif (2) présentant au moins un capteur (8) qui est réalisé pour déterminer au moins une pression de lubrifiant à l'intérieur du système de lubrification (1), le système de lubrification (1) présentant en outre un appareil de commande (10) qui est réalisé pour recevoir des valeurs de mesure provenant du capteur (8),
l'appareil de commande (10) étant réalisé pour détecter des cycles de lubrification sur la base des valeurs de mesure et pour déterminer la pression moyenne d'un cycle de lubrification, pour comparer la pression moyenne déterminée à une pression normale du système de lubrification (1) et pour déterminer l'état du système de lubrification (1) sur la base du résultat de la comparaison,
l'appareil de commande (10) étant réalisé pour déterminer, en plus de la pression moyenne, une pression maximale, une pression minimale et une température du système de lubrification (1), **caractérisé en ce que** l'appareil de commande est réalisé pour attribuer la pression moyenne à une plage de températures sur la base de la température du système de lubrification (1) et pour récupérer dans une base de données (12) la pression normale du système de lubrification (1) attribuée à la plage de températures.

2. Système de lubrification selon la revendication 1, les valeurs mesurées étant au moins une pression et une température du système de lubrification (1).

3. Système de lubrification selon la revendication 1 ou 2, l'appareil de commande (10) étant réalisé pour détecter un cycle de lubrification sur la base des fluctuations de pression du système de lubrification (1).

4. Système de lubrification selon l'une quelconque des revendications précédentes, l'appareil de commande (10) étant réalisé pour enregistrer la pression moyenne en tant que pression normale pour la plage de températures lorsqu'aucune pression normale n'est présente dans la base de données (12) pour la plage de températures.

5. Système de lubrification selon l'une quelconque des revendications précédentes, l'appareil de commande (10) étant réalisé pour actualiser la pression normale du système de lubrification (1) pour une plage de températures sur la base de la pression moyenne actuelle de cette plage de températures lorsqu'un fonctionnement sans perturbation est détecté.

6. Système de lubrification selon l'une quelconque des revendications précédentes, l'état du système de lubrification (1) indiquant un fonctionnement sans perturbation, un dysfonctionnement du système de lubrification (1) ou une absence de fonctionnement du système de lubrification (1).

7. Système de lubrification selon la revendication 6, le dysfonctionnement étant un blocage d'un conduit de lubrifiant, une pliure dans un conduit de lubrifiant, une rupture de conduit de lubrifiant ou tout autre dysfonctionnement du système de lubrification (1).

8. Système de lubrification selon l'une quelconque des revendications précédentes, l'au moins un capteur (8) présentant un capteur de pression qui est agencé avant le distributeur progressif (2).

9. Appareil de commande (10) conçu pour exécuter le procédé selon la revendication 10 pour un système de lubrification (1) selon l'une quelconque des revendications précédentes.

10. Procédé pour déterminer l'état d'un système de lubrification (1) comprenant un distributeur progressif (2) réalisé pour délivrer du lubrifiant à un consommateur (6), le procédé présentant :
la détermination d'au moins une pression de lubrifiant à l'intérieur du système de lubrification (1) par un capteur (8),
la réception des valeurs de mesure provenant du capteur (8) par un appareil de commande (10),
la détection de cycles de lubrification sur la base des valeurs de mesure,
la détermination de la pression moyenne d'un cycle de lubrification,
la détermination d'une pression maximale, d'une pression minimale et d'une température du système de lubrification,
l'attribution de la pression moyenne à une plage de températures sur la base de la température du système de lubrification (1),
la récupération dans une base de données (12) de la pression normale du système de lubrification (1) associé à la plage de températures,
la comparaison de la pression moyenne déterminée avec une pression normale du système de lubrification (1), et
la détermination de l'état du système de lubrification (1) sur la base du résultat de la comparaison.
